# EUROPEAN PATENT SPECIFICATION

(11) **EP 4 617 586 B1**
(45) Date of publication and mention of the grant of the patent: **02.12.2026**
(21) Application number: 24820525.4
(22) Date of filing: 01.10.2024
(51) Int. Cl.: F24H 15/168, F24H 1/18, F24H 15/176, F24H 15/225, F24H 15/269, F24H 15/281, F24H 15/375, F24H 15/429, F24H 15/457, G06Q 50/06, H02J 3/14, H02J 13/00, F24D 17/02, F24D 19/10, F24H 15/156, F24H 15/172, F24H 15/174, F24H 15/246, F24H 15/45

(54) **HOT WATER SUPPLY SYSTEM**
HEISSWASSERVERSORGUNGSSYSTEM
SYSTÈME D'ALIMENTATION EN EAU CHAUDE

(30) Priority: 31.01.2024 JP 2024013164
(43) Date of publication of application: 17.09.2025
(73) Proprietor: DAIKIN INDUSTRIES, LTD., Osaka-Shi, Osaka 530-0001 (JP)
(72) Inventor: NOBORITATE, Wataru, Osaka-shi, Osaka 530-0001 (JP); OGAWA, Kouhei, Osaka-shi, Osaka 530-0001 (JP)
(74) Representative: Conti, Marco
(86) International application number: PCT/JP2024/035052
(87) International publication number: WO 2025/163969

(56) References cited:
- JP-A- 2009 047 377
- JP-A- 2012 032 025
- JP-A- 2014 114 965
- JP-A- 2015 004 458
- JP-A- 2016 148 484
- JP-A- 2017 003 194
- JP-A- 2021 018 021

## Description

### TECHNICAL FIELD

The present disclosure relates to a hot water supply system.

### BACKGROUND ART

According to a conventionally known mechanism, a power supplier (electric power company) requests, to a power consumer, demand response (DR) relevant to power consumption or suppression, and the power consumer adjusts a power consumption quantity for adjustment of balance between supply and demand of electric power.

Upon receipt of a DR request for power reduction (decreasing DR request), a hot water reserving hot water supply apparatus executes planned boiling operation during a time zone other than a time zone according to the decreasing DR request, and hot water thus heated is reserved in a hot water reservoir tank. The hot water reserving hot water supply apparatus further outputs the hot water thus reserved in accordance with a hot water output command from a user. The hot water output command is a command to start hot water filling operation or similar operation to supply hot water to a bathtub.

Patent Literature 1 (JP 2019-105984 A) discloses a device control apparatus configured to change a setting condition of an air conditioner to a setting condition desired by a user during demand response control in response to a decreasing DR request. The user selects a desired setting condition from one or more setting conditions presented by the device control apparatus. Further examples of hot water supply systems are disclosed by patent documents JP2016148484A, JP2012032025A, JP2017003194A, JP2014114965A, JP2015004458A, JP2021018021A and JP2009047377A.

### SUMMARY OF THE INVENTION

### <Technical Problem>

The hot water reserving hot water supply apparatus executes planned boiling operation and preliminarily reserves hot water thus heated in the hot water reservoir tank. Accordingly, timing of hot water output and timing of boiling operation are different from each other. The device control apparatus according to Patent Literature 1, which requires selection by the user, may thus lead to deterioration of user convenience.

The present disclosure provides a hot water supply system achieving enhancement of user convenience.

### <Solution to Problem>

Aim of the present invention is to provide a hot water supply system which improve the state of the art indicated above. This aim is achieved by the hot water supply system according to the corresponding appended claims.

A hot water supply system according to a first aspect of the invention has been defined in claim 1.

Prohibiting hot water output during the first period leads to deterioration of user convenience. Such a configuration leads to enhancement of user convenience.

A hot water supply system according to a second aspect is the hot water supply system according to the first aspect, in which the control unit determines whether or not to respond to the hot water output command in accordance with a degree of urgency.

Determining whether or not to output hot water in accordance with the degree of urgency leads to enhancement of user convenience.

A hot water supply system according to a third aspect is the hot water supply system according to the second aspect, in which the control unit determines the degree of urgency in accordance with user operation.

Determining whether or not to output hot water in accordance with user operation leads to enhancement of user convenience.

Determining whether or not to output hot water in accordance with the expected hot water output quantity leads to enhancement of user convenience.

A hot water supply system according to a fourth aspect is the hot water supply system according to the fourth aspect, in which the control unit outputs hot water in response to the hot water output command when the residual hot water quantity is less than a second water quantity obtained by adding the expected hot water output quantity and a predetermined first water quantity, wherein the first water quantity is a general quantity of hot water used by a user via a faucet or a shower for bathing, and wherein the second water quantity is a quantity obtained by adding the first water quantity and the expected hot water output quantity.

In such a configuration, hot water is output even when the residual hot water quantity is less than the second water quantity, so as to enhance user convenience.

A hot water supply system according to a fifth aspect is the hot water supply system according to the fourth aspect, in which the control unit executes the boiling operation and outputs hot water.

Such a configuration can suppress hot water shortage. This leads to enhancement of user convenience.

A hot water supply system according to a sixth aspect is the hot water supply system according to the fifth aspect, in which the control unit heats hot water such that the residual hot water quantity becomes equal to or more than the first water quantity during the boiling operation.

Such a configuration can suppress hot water shortage. This leads to enhancement of user convenience.

A hot water supply system according to an seventh aspect is the hot water supply system according to any one of the fourth to sixth aspects, in which the control unit outputs hot water having a quantity equal to or less than the residual hot water quantity.

Such a configuration achieves response to a decreasing DR request.

A hot water supply system according to a eighth aspect is the hot water supply system according to claims 1 to 3, in which the control unit does not output hot water in accordance with the hot water output command when the residual hot water quantity is less than a second water quantity obtained by adding the expected hot water output quantity and a predetermined first water quantity, wherein the first water quantity is a general quantity of hot water used by a user via a faucet or a shower for bathing and wherein the second water quantity is a quantity obtained by adding the first water quantity and the expected hot water output quantity.

Such a configuration achieves response to a decreasing DR request.

A hot water supply system according to an ninth aspect is the hot water supply system according to claim 1 in which the control unit executes the boiling operation and outputs hot water when a residual hot water quantity in the tank is less than an expected hot water output quantity according to the hot water output command and the first time period is equal to or longer than a predetermined second time period, the first time period being defined as a length of time from an expected hot water output time according to the hot water output command to an end time of the first period,

Hot water is output if the first time period is equal to or longer than the second time period even when the residual hot water quantity is short, so as to enhance user convenience.

A hot water supply system according to a tenth aspect is the hot water supply system according to the claim 1 in which the control unit does not output hot water in accordance with the hot water output command when a residual hot water quantity in the tank is less than an expected hot water output quantity according to the hot water output command and the first time period is shorter than the predetermined second time period.

Such a configuration achieves response to a decreasing DR request.

A hot water supply system according to a eleventh aspect is the hot water supply system according to any one of the first to tenth aspects, in which the control unit controls operation of two or more of the hot water supply apparatuses. When one of hot water supply apparatuses executes the boiling operation during the first period, the control unit restricts operation of the remaining hot water supply apparatuses.

Such a configuration achieves response to a decreasing DR request.

A hot water supply system according to a twelfth aspect is the hot water supply system according to any one of the first to eleventh aspects, in which the control unit sets a power consumption reduction target value to a value equal to or more than a power consumption reduction average value set in accordance with the demand response request.

Such a configuration achieves response to a decreasing DR request.

A hot water supply system according to an thirteenth aspect is the hot water supply system according to any one of the first to twelfth aspects, in which the control unit restricts a number of the hot water supply apparatuses executing the boiling operation during the first period.

Such a configuration achieves response to a decreasing DR request.

### BRIEF DESCRIPTION OF THE DRAWINGS

FIG. 1 is a schematic configuration diagram of a hot water supply system.
FIG. 2 is a functional block diagram of the hot water supply system.
FIG. 3 is a flowchart depicting a flow of hot water output determination processing according to a first embodiment.
FIG. 4 is an explanatory view of a first water quantity and a second water quantity.
FIG. 5 is a flowchart depicting a flow of hot water output determination processing according to a second embodiment.
FIG. 6 is a flowchart depicting a flow of hot water output determination processing according to a third embodiment.
FIG. 7 is a functional block diagram of a hot water supply system according to a fourth embodiment.

### DESCRIPTION OF EMBODIMENTS

### <First embodiment>

### (1) Entire configuration

A hot water supply system 100 according to the first embodiment will be described with reference to the drawings.

The hot water supply system 100 adjusts power consumption in a commercial power grid in accordance with a demand response request (hereinafter, occasionally referred to as a DR request).

Demand response means adjustment, by a user (consumer) to be supplied with electric power in a commercial power grid, of power consumption in the commercial power grid in accordance with a request from an aggregator 90 such as an electric power company as a supplier of the electric power in the commercial power grid. The aggregator 90 pays the user reward as a compensation for demand response, in accordance with an adjusted quantity of power consumption in the commercial power grid.

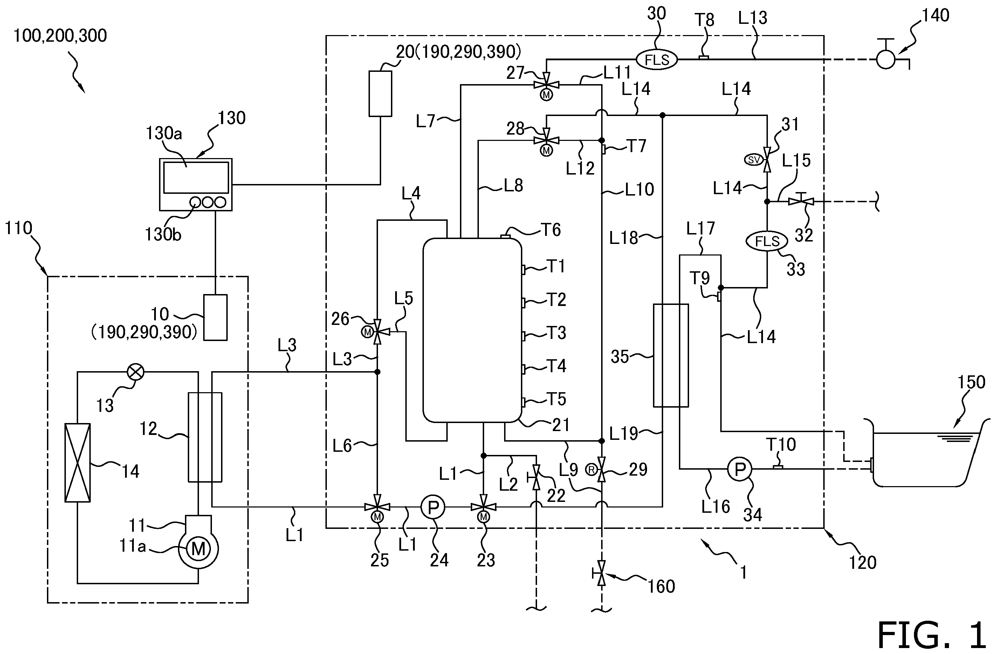

FIG. 1 is a schematic configuration diagram of the hot water supply system 100. As depicted in FIG. 1, the hot water supply system 100 principally includes a heat pump unit 110, a hot water reservoir unit 120, a remote controller 130, and a control unit 190. The hot water reservoir unit 120 is connected to a hot water supply unit 140, a bathtub 150, and a water shut off valve 160.

The heat pump unit 110 heats hot water supplied from the hot water reservoir unit 120 and supplies the hot water reservoir unit 120 with the hot water thus heated. The hot water reservoir unit 120 reserves the hot water thus heated and supplied from the heat pump unit 110, mixes the hot water being reserved and water supplied from the water shut off valve 160, and supplies the hot water supply unit 140 and the bathtub 150 with the water thus mixed. The heat pump unit 110 and the hot water reservoir unit 120 constitute a hot water supply apparatus 1 configured to boil hot water in a hot water reservoir tank (tank) 21 included in the hot water reservoir unit 120. Examples of the hot water supply unit 140 include a faucet and a shower. The water shut off valve 160 is connected to an external water supply source such as a water supply. The water shut off valve 160 is operated to supply the hot water reservoir unit 120 with water.

Herein, "hot water" means at least one of hot water or cold water. Accordingly, both water to be heated by the heat pump unit 110 and water having been heated by the heat pump unit 110 will be called hot water.

### (2) Detailed configurations

### (2-1) Heat pump unit

The heat pump unit 110 principally includes a compressor 11, a water heat exchanger 12, an expansion valve 13, and an air heat exchanger 14. The compressor 11, the water heat exchanger 12, the expansion valve 13, and the air heat exchanger 14 are connected into a ring shape via refrigerant pipes to constitute a heat pump cycle. The compressor 11 has a discharge side connected to the water heat exchanger 12, and a suction side connected to the air heat exchanger 14. The expansion valve 13 is connected to the water heat exchanger 12 at one end, and the other end is connected to the air heat exchanger 14. The heat pump unit 110 further includes a first control device 10.

The heat pump cycle allows circulation of a refrigerant having critical temperature higher than temperature of heated hot water supplied from the heat pump unit 110 to the hot water reservoir unit 120. The critical temperature of the refrigerant is preferred to be higher by 10°C or more than the temperature of the heated hot water. Examples of the refrigerant include R32 (critical temperature 78.1°C), HFO-1234yf (critical temperature 95.0°C), and R410 (critical temperature 71.4°C).

The compressor 11 includes a compression mechanism configured to compress a refrigerant when a motor 11a is driven. The refrigerant compressed by the compressor 11 is sent to the water heat exchanger 12. The heat pump unit 110 has a heating capacity adjustable through control of an operating frequency of the motor 11a.

The water heat exchanger 12 causes heat exchange between the refrigerant compressed by the compressor 11 and having high temperature and hot water supplied from the hot water reservoir unit 120 to heat the hot water. Examples of the water heat exchanger 12 include a double pipe heat exchanger including an outer pipe and an inner pipe inserted to the outer pipe. The examples of the water heat exchanger 12 may further include a plate heat exchanger. Examples of the heating capacity of the heat pump unit 110 include a quantity of heat provided by the water heat exchanger 12 to hot water supplied from the hot water reservoir unit 120 per unit time.

The expansion valve 13 decompresses the refrigerant having passed through the water heat exchanger 12 and having exchanged heat. Examples of the expansion valve 13 include an electric expansion valve. The examples of the expansion valve 13 may further include a capillary tube or the like.

The air heat exchanger 14 causes heat exchange between the refrigerant having passed through the expansion valve 13 and having been decompressed and outdoor air to heat the refrigerant. The air heat exchanger 14 is supplied with outdoor air from an outdoor air fan or the like. The refrigerant having passed through the air heat exchanger 14 and having exchanged heat is sent to the compressor 11.

### (2-2) Hot water reservoir unit

The hot water reservoir unit 120 principally includes a hot water reservoir tank 21, a first drain valve 22, a water inlet valve 23, a boiling pump 24, a bypass valve 25, a boiling valve 26, a first mixing valve 27, a second mixing valve 28, a decompression valve 29, a first flow rate sensor 30, a hot water filling electromagnetic valve 31, a second drain valve 32, a second flow rate sensor 33, a reheat pump 34, and a reheat heat exchanger 35. These elements are connected by pipes L1 to L19 for flows of hot water. The hot water reservoir tank 21 and the pipes L10, L13, L14, and L16 are provided with temperature sensors T1 to T10. The hot water reservoir unit 120 further includes a second control device 20.

The hot water reservoir tank 21 reserves hot water. The hot water reservoir tank 21 is provided with six temperature sensors T1 to T6. The six temperature sensors T1 to T6 include a first hot water quantity temperature sensor T1, a second hot water quantity temperature sensor T2, a third hot water quantity temperature sensor T3, a fourth hot water quantity temperature sensor T4, a fifth hot water quantity temperature sensor T5, and an upper temperature sensor T6. The upper temperature sensor T6 is provided near an upper end surface of the hot water reservoir tank 21. The first to fifth hot water quantity temperature sensors T1 to T5 are disposed on a side surface of the hot water reservoir tank 21 at intervals from an upper side to a lower side.

Water has density changed in accordance with temperature. Hot water reserved in the hot water reservoir tank 21 thus forms layers having higher temperature on an upper side and having lower temperature on a lower side. A quantity of hot water (residual hot water quantity) in the hot water reservoir tank 21 can thus be acquired by detecting the temperature distribution in a vertical direction of the hot water in the hot water reservoir tank 21 in accordance with output signals from the temperature sensors T1 to T6. The number of the temperature sensors provided at the hot water reservoir tank 21 for acquisition of a residual hot water quantity in the hot water reservoir tank 21 may alternatively be any appropriate number other than six.

A water inlet pipe L1 is connected to a lower end surface of the hot water reservoir tank 21 at one end, and the other end is connected to an inlet side of the water heat exchanger 12 in the heat pump unit 110. The water inlet pipe L1 is provided with the water inlet valve 23, the boiling pump 24, and the bypass valve 25 from the hot water reservoir tank 21 toward the water heat exchanger 12. Each of the water inlet valve 23 and the bypass valve 25 is an electric three-way valve.

At a point between the hot water reservoir tank 21 and the water inlet valve 23, a first drain pipe L2 branches from the water inlet pipe L1. The first drain pipe L2 is provided with the first drain valve 22. The first drain pipe L2 is connected to a drain pipe at a point outside the hot water reservoir unit 120. The first drain valve 22 is operated to, for example, discharge hot water in the hot water reservoir tank 21 to the outside.

A hot water outlet pipe L3 is connected to an outlet side of the water heat exchanger 12 in the heat pump unit 110 at one end, and the other end is connected to the boiling valve 26. The boiling valve 26 is an electric three-way valve.

A first return pipe L4 is connected to the boiling valve 26 at one end, and the other end is connected to the upper end surface of the hot water reservoir tank 21.

A second return pipe L5 is connected to the boiling valve 26 at one end, and the other end is connected to the lower end surface of the hot water reservoir tank 21.

A bypass pipe L6 is connected to the bypass valve 25 at one end, and the other end is connected to the hot water outlet pipe L3.

A first boiling pipe L7 is connected to the upper end surface of the hot water reservoir tank 21 at one end, and the other end is connected to the first mixing valve 27. The first mixing valve 27 is an electric three-way valve.

A second boiling pipe L8 is connected to the upper end surface of the hot water reservoir tank 21 at one end, and the other end is connected to the second mixing valve 28. The second mixing valve 28 is an electric three-way valve.

A tank water supply pipe L9 is connected to the water shut off valve 160 at a point outside the hot water reservoir unit 120 at one end, and the other end is connected to the lower end surface of the hot water reservoir tank 21. The tank water supply pipe L9 is provided with the decompression valve 29. The decompression valve 29 is operated to adjust pressure (water supply pressure) of water supplied to the hot water reservoir unit 120 via the water shut off valve 160.

At a point between the decompression valve 29 and the hot water reservoir tank 21, a branching water supply pipe L10 branches from the tank water supply pipe L9. The branching water supply pipe L10 branches into a first mixed water pipe L11 and a second mixed water pipe L12. The first mixed water pipe L11 is connected to the first mixing valve 27. The second mixed water pipe L12 is connected to the second mixing valve 28. The branching water supply pipe L10 is provided with a mixed water temperature sensor T7. The mixed water temperature sensor T7 detects the temperature of hot water flowing in the branching water supply pipe L10.

A first hot water supply pipe L13 is connected to the first mixing valve 27 at one end, and the other end is connected to the hot water supply unit 140. The first hot water supply pipe L13 is provided with the first flow rate sensor 30. The first flow rate sensor 30 detects a flow rate of hot water in the first hot water supply pipe L13. At a point between the first flow rate sensor 30 and the hot water supply unit 140, the first hot water supply pipe L13 is provided with a first hot water supply temperature sensor T8. The first hot water supply temperature sensor T8 detects the temperature of hot water flowing in the first hot water supply pipe L13.

A second hot water supply pipe L14 is connected to the second mixing valve 28 at one end, and the other end is connected to the bathtub 150. The second hot water supply pipe L14 is provided with the hot water filling electromagnetic valve 31 and the second flow rate sensor 33 from the second mixing valve 28 toward the bathtub 150. The second flow rate sensor 33 detects a flow rate of hot water in the second hot water supply pipe L14.

At a point between the hot water filling electromagnetic valve 31 and the second flow rate sensor 33, a second drain pipe L15 branches from the second hot water supply pipe L14. The second drain pipe L15 is provided with the second drain valve 32. The second drain pipe L15 is connected to a drain pipe at a point outside the hot water reservoir unit 120. The second drain valve 32 is operated to, for example, discharge a part of hot water flowing in the second hot water supply pipe L14 to the outside in order to adjust a quantity of hot water flowing in the second hot water supply pipe L14.

A first bathtub return pipe L16 is connected to the bathtub 150 at one end, and the other end is connected to an inlet side of the reheat heat exchanger 35. The first bathtub return pipe L16 is provided with the reheat pump 34. At a point between the bathtub 150 and the reheat pump 34, the first bathtub return pipe L16 is provided with a bathtub return temperature sensor T10. The bathtub return temperature sensor T10 detects temperature of hot water flowing in the first bathtub return pipe L16.

A second bathtub return pipe L17 is connected to an outlet side of the reheat heat exchanger 35 at one end, and the other end is connected to the second hot water supply pipe L14 at a point between the second flow rate sensor 33 and the bathtub 150. At a point between a connection point of the second bathtub return pipe L17 with the second hot water supply pipe L14 and the bathtub 150, the second hot water supply pipe L14 is provided with a second hot water supply temperature sensor T9. The second hot water supply temperature sensor T9 detects temperature of hot water flowing in the second hot water supply pipe L14.

At a point between the second mixing valve 28 and the hot water filling electromagnetic valve 31, a first reheat pipe L18 branches from the second hot water supply pipe L14. The first reheat pipe L18 is connected to the inlet side of the reheat heat exchanger 35.

A second reheat pipe L19 is connected to the outlet side of the reheat heat exchanger 35 at one end, and the other end is connected to the water inlet valve 23.

### (2-3) Remote controller

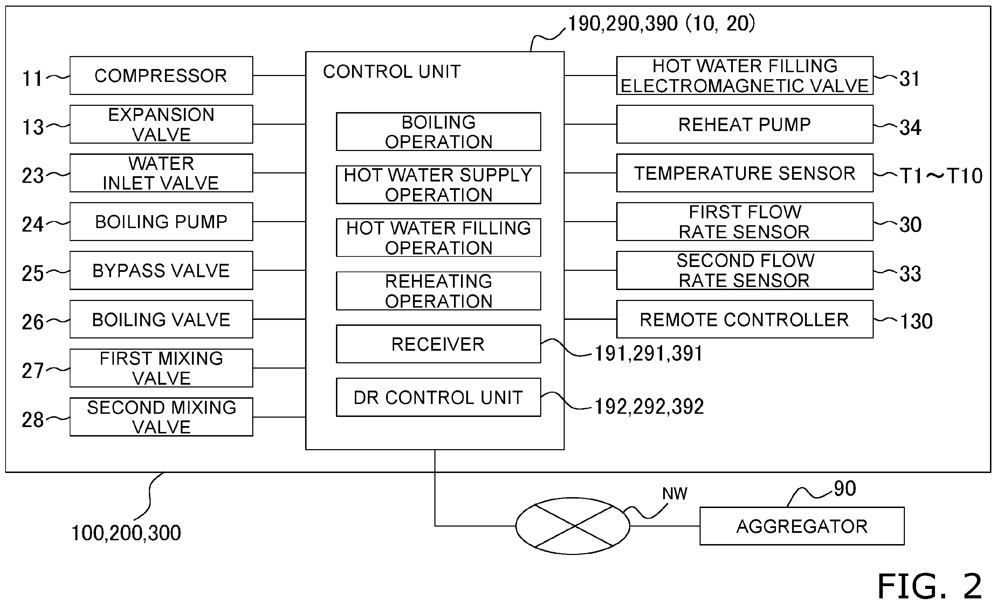

The remote controller 130 is a user interface for control of the hot water supply apparatus 1. The remote controller 130 is installed in a kitchen, a bathroom, or the like. As depicted in FIG. 2, the remote controller 130 is connected to the first control device 10 and the second control device 20 so as to be interactively data communicable by wireless communication or wired communication. Each of the first control device 10 and the second control device 20 receives a signal or the like commanding operation of the hot water supply apparatus 1 from the remote controller 130 by wireless communication or wired communication. Examples of the user interface for the hot water supply apparatus 1 may include, in addition to the remote controller 130, a mobile information terminal such as a smartphone.

The remote controller 130 includes a display unit 130a and an operation unit 130b. Examples of the display unit 130a include a liquid crystal display and an organic EL display.

The display unit 130a displays information on a state of the hot water supply apparatus 1, information on a setting of the hot water supply apparatus 1, and the like. The display unit 130a displays a set value of temperature of hot water (hot water supply temperature) supplied to the hot water supply unit 140 and the bathtub 150, a residual hot water quantity in the hot water reservoir tank 21, and the like.

The operation unit 130b includes a button, a dial, a key, and the like to be operated by the user of the hot water supply apparatus 1. The user of the hot water supply apparatus 1 operates the operation unit 130b to input information on the set value of hot water supply temperature, and the like. Examples of the display unit 130a may include a touch screen also functioning as the operation unit 130b.

The remote controller 130 may further include a speaker, a microphone, and the like. In this case, the remote controller 130 may notify of the information displayed on the display unit 130a by means of the speaker, and may acquire the information input through the operation unit 130b by means of the microphone.

### (2-4) control unit

The control unit 190 principally comprises the first control device 10 in the heat pump unit 110 and the second control device 20 in the hot water reservoir unit 120. Each of the first control device 10 and the second control device 20 typically comprises a microcomputer including a control arithmetic device and a storage device, and an input-output circuit. The control arithmetic device is a processor such as a CPU or a GPU. The control arithmetic device reads a control program stored in the storage device, and controls operation of the hot water supply apparatus 1 in accordance with the control program. The control arithmetic device is further configured to write an arithmetic result to the storage device and read information stored in the storage device in accordance with the control program.

The control unit 190 is not limited to the above in terms of its configuration. For example, the first control device 10 and the second control device 20 may interactively communicate to operate cooperatively. Instead of including the first control device 10 and the second control device 20, the control unit 190 may include a device having functions of both the first control device 10 and the second control device 20 and provided in any one of the heat pump unit 110 and the hot water reservoir unit 120. Such a device may be disposed outside the hot water supply apparatus 1 and may be connected to the heat pump unit 110 and the hot water reservoir unit 120 via a network.

FIG. 2 is a functional block diagram of the hot water supply system 100. As depicted in FIG. 2, the control unit 190 controls the compressor 11, the expansion valve 13, the water inlet valve 23, the boiling pump 24, the bypass valve 25, the boiling valve 26, the first mixing valve 27, the second mixing valve 28, the hot water filling electromagnetic valve 31, the reheat pump 34, and the like in accordance with signals from the temperature sensors T1 to T10, the first flow rate sensor 30, and the second flow rate sensor 33. The control unit 190 is communicably connected to the aggregator 90 via a network NW.

The control unit 190 principally executes boiling operation, hot water supply operation, hot water filling operation, and reheating operation. The control unit 190 includes, as a functional block, a receiver 191 and a DR control unit 192.

### (2-4-1) Boiling operation

Boiling operation includes heating hot water in the hot water reservoir tank 21 by means of the heat pump unit 110. During boiling operation, the boiling pump 24 is driven to guide hot water in the hot water reservoir tank 21 into the water heat exchanger 12 through the water inlet pipe L1 so as to be heated. The hot water heated in the water heat exchanger 12 is returned into the hot water reservoir tank 21 through the hot water outlet pipe L3, the first return pipe L4, and the second return pipe L5. In this manner, boiling operation includes heating, in the water heat exchanger 12, hot water in the hot water reservoir tank 21 while circulating the hot water through the water inlet pipe L1, the hot water outlet pipe L3, the first return pipe L4, and the second return pipe L5.

The control unit 190 executes boiling operation by controlling the compressor 11, the expansion valve 13, the water inlet valve 23, the boiling pump 24, the bypass valve 25, and the boiling valve 26. The control unit 190 controls the operating frequency of the motor 11a for the compressor 11 and an opening degree of the expansion valve 13 to adjust a heating capacity of the heat pump unit 110, temperature of hot water (hot water output temperature) heated in the water heat exchanger 12, and the like. The control unit 190 controls a number of revolutions of the boiling pump 24 to adjust hot water output temperature, a residual hot water quantity in the hot water reservoir tank 21, a flow rate of hot water (reserved flow rate) supplied into the hot water reservoir tank 21, and the like.

During ordinary boiling operation of circulating hot water in the hot water reservoir tank 21, the control unit 190 controls the water inlet valve 23 to prevent the water inlet pipe L1 from communicating with the second reheat pipe L19, and controls the bypass valve 25 to prevent the water inlet pipe L1 from communicating with the bypass pipe L6. As to be described later, the control unit 190 controls the water inlet valve 23 for execution of reheating operation.

The control unit 190 is configured to control the bypass valve 25 to switch between a state where hot water flowing in the water inlet pipe L1 passes through the water heat exchanger 12 and is supplied into the hot water outlet pipe L3 and a state where hot water flowing in the water inlet pipe L1 bypasses the water heat exchanger 12 and is supplied into the hot water outlet pipe L3. In the state of bypassing the water heat exchanger 12, the water inlet pipe L1 communicates with the bypass pipe L6 and hot water in the hot water reservoir tank 21 circulates without being heated in the water heat exchanger 12.

The control unit 190 is configured to control the boiling valve 26 to switch between a state where hot water is supplied from the water heat exchanger 12 into the hot water reservoir tank 21 through the first return pipe L4, and a state where hot water is supplied from the water heat exchanger 12 into the hot water reservoir tank 21 through the second return pipe L5.

The control unit 190 may acquire hot water output temperature, a residual hot water quantity, and a reserved flow rate in accordance with the operating frequency of the motor 11a for the compressor 11, the opening degree of the expansion valve 13, the number of revolutions of the boiling pump 24, states of the bypass valve 25 and the boiling valve 26, output signals from the temperature sensors T1 to T6 at the hot water reservoir tank 21, and the like.

The control unit 190 may feedback control the operating frequency of the motor 11a for the compressor 11, the opening degree of the expansion valve 13, the number of revolutions of the boiling pump 24, and the states of the bypass valve 25 and the boiling valve 26 such that the hot water output temperature, the residual hot water quantity, and the reserved flow rate reach predetermined target values.

The control unit 190 executes boiling operation with use of the electric power in the commercial power grid. A time zone for execution of boiling operation may be set through operation of the remote controller 130 by the user of the hot water supply apparatus 1.

### (2-4-2) Hot water supply operation

Hot water supply operation includes outputting hot water in the hot water reservoir tank 21 from the hot water supply unit 140. In a case where the hot water supply unit 140 is a faucet, during hot water supply operation, the faucet is opened to supply external water from a bottom of the hot water reservoir tank 21 into the hot water reservoir tank 21 through the tank water supply pipe L9 due to water supply pressure. Accordingly, hot water having high temperature and reserved in the hot water reservoir tank 21 is pushed out of a top of the hot water reservoir tank 21 through the first boiling pipe L7.

Subsequently, the hot water having high temperature is supplied from the hot water reservoir tank 21 to the first mixing valve 27 through the first boiling pipe L7, and the external water is supplied to the first mixing valve 27 through the tank water supply pipe L9, the branching water supply pipe L10, and the first mixed water pipe L11. At the first mixing valve 27, the hot water having high temperature from the first boiling pipe L7 is mixed with the water from the first mixed water pipe L11. Hot water thus obtained by mixing is output from the hot water supply unit 140 through the first hot water supply pipe L13.

When the user opens the hot water supply unit 140 and the first flow rate sensor 30 detects an increase in the flow rate of hot water in the first hot water supply pipe L13, the control unit 190 starts hot water supply operation. During hot water supply operation, the control unit 190 controls the first mixing valve 27 in accordance with temperature of hot water output from the hot water supply unit 140. The control unit 190 may adopt temperature detected by the first hot water supply temperature sensor T8 as the temperature of the hot water output from the hot water supply unit 140.

The control unit 190 may feedback control a mixture ratio between hot water having high temperature and water at the first mixing valve 27 in accordance with output signals from the mixed water temperature sensor T7 and the first hot water supply temperature sensor T8, and the like, such that the temperature of the hot water output from the hot water supply unit 140 reaches a predetermined target value.

### (2-4-3) Hot water filling operation

Hot water filling operation includes supplying the bathtub 150 with hot water in the hot water reservoir tank 21. During hot water filling operation, the hot water filling electromagnetic valve 31 is opened to supply external water from the bottom the hot water reservoir tank 21 into the hot water reservoir tank 21 through the tank water supply pipe L9 due to water supply pressure. Accordingly, hot water having high temperature and reserved in the hot water reservoir tank 21 is pushed out of the top of the hot water reservoir tank 21 through the second boiling pipe L8.

Subsequently, the hot water having high temperature is supplied from the hot water reservoir tank 21 to the second mixing valve 28 through the second boiling pipe L8, and the external water is supplied to the second mixing valve 28 through the tank water supply pipe L9, the branching water supply pipe L10, and the second mixed water pipe L12. At the second mixing valve 28, the hot water having high temperature from the second boiling pipe L8 is mixed with the water from the second mixed water pipe L12. Hot water thus obtained by mixing is supplied into the bathtub 150 through the second hot water supply pipe L14.

The control unit 190 opens the hot water filling electromagnetic valve 31 upon receipt of a start signal for hot water filling operation by user operation of the remote controller 130, and starts hot water filling operation when the second flow rate sensor 33 detects an increase in the flow rate of hot water in the second hot water supply pipe L14. During hot water filling operation, the control unit 190 controls the second mixing valve 28 in accordance with temperature of hot water supplied into the bathtub 150. The control unit 190 may adopt temperature detected by the second hot water supply temperature sensor T9 as the temperature of the hot water supplied into the bathtub 150.

The control unit 190 may feedback control a mixture ratio between hot water having high temperature and water at the second mixing valve 28 in accordance with output signals from the mixed water temperature sensor T7 and the second hot water supply temperature sensor T9, and the like, such that the temperature of the hot water supplied into the bathtub 150 reaches a predetermined target value.

During hot water filling operation, the control unit 190 may close the hot water filling electromagnetic valve 31 to end hot water filling operation upon receipt of an end signal for hot water filling operation by user operation of the remote controller 130 or when a water level in the bathtub 150 detected by a water level sensor (not depicted) provided at the bathtub 150 reaches a predetermined target value.

### (2-4-4) Reheating operation

Reheating operation includes heating, in the reheat heat exchanger 35, hot water in the bathtub 150 and returning the hot water thus heated into the bathtub 150. When the reheat pump 34 is driven during reheating operation, part of the hot water in the bathtub 150 is guided into the reheat heat exchanger 35 through the first bathtub return pipe L16 to be heated. The hot water heated in the reheat heat exchanger 35 is returned into the bathtub 150 through the second bathtub return pipe L17 and the second hot water supply pipe L14. In this manner, reheating operation includes heating, in the reheat heat exchanger 35, hot water in the bathtub 150 while circulating the hot water through the first bathtub return pipe L16, the second bathtub return pipe L17, and the second hot water supply pipe L14.

The reheat heat exchanger 35 causes heat exchange between hot water having high temperature and supplied from the hot water reservoir tank 21 through the second hot water supply pipe L14 and the first reheat pipe L18, and hot water having low temperature and supplied from the bathtub 150 through the first bathtub return pipe L16. The reheat heat exchanger 35 accordingly heats the hot water supplied from the bathtub 150 through the first bathtub return pipe L16. The hot water having high temperature and supplied to the reheat heat exchanger 35 through the first reheat pipe L18 exchanges heat and is then supplied to the water inlet pipe L1 through the second reheat pipe L19 and via the water inlet valve 23. Examples of the reheat heat exchanger 35 may include a counterflow heat exchanger configured to cause heat exchange between hot water having high temperature and hot water having low temperature flowing in opposite directions.

Upon receipt of a start signal for reheating operation by user operation of the remote controller 130, the control unit 190 controls the water inlet valve 23 to cause the water inlet pipe L1 and the second reheat pipe L19 to communicate with each other, drives the boiling pump 24 and the reheat pump 34, and starts reheating operation. During reheating operation, the control unit 190 controls numbers of revolutions of the boiling pump 24 and the reheat pump 34 in accordance with temperature of the hot water in the bathtub 150 and temperature of the hot water returned from the reheat heat exchanger 35 into the bathtub 150. The control unit 190 may adopt temperature detected by the bathtub return temperature sensor T10 as the temperature of the hot water in the bathtub 150, and temperature detected by the second hot water supply temperature sensor T9 as the temperature of the hot water returned from the reheat heat exchanger 35 into the bathtub 150.

The control unit 190 may feedback control the numbers of revolutions of the boiling pump 24 and the reheat pump 34 in accordance with output signals from the second hot water supply temperature sensor T9 and the bathtub return temperature sensor T10, and the like, such that the temperature of the hot water in the bathtub 150 reaches a predetermined target value.

During reheating operation, the control unit 190 may control the water inlet valve 23 to prevent the second reheat pipe L19 from communicating with the water inlet pipe L1 and may stop the reheat pump 34 to end reheating operation upon receipt of an end signal for reheating operation by user operation of the remote controller 130 or when the temperature of the hot water in the bathtub 150 reaches the predetermined target value.

### (2-4-5) Receiver

The receiver 191 receives a DR request from the aggregator 90 via the network NW. The DR request includes a decreasing DR request and an increasing DR request.

The decreasing DR request corresponds to a request to decrease power consumption of the hot water supply apparatus 1 during a first period in comparison to an ordinary level. The aggregator 90 issues the decreasing DR request to the control unit 190 before the first period while the electric power in the commercial power grid is predicted to be tight.

The increasing DR request corresponds to a request to increase power consumption of the hot water supply apparatus 1 during a second period in comparison to the ordinary level. The aggregator 90 issues the increasing DR request to the control unit 190 before the second period while the electric power in the commercial power grid is predicted to be in excess.

Each of the decreasing DR request and the increasing DR request may include a target value relevant to power consumption.

### (2-4-6) DR control unit

The DR control unit 192 controls not to execute boiling operation during the first period. However, if the DR control unit 192 determines to execute boiling operation as to be described later, boiling operation is executed.

Upon receipt of a hot water output command during the first period, the DR control unit 192 determines whether or not to respond to the hot water output command and controls operation of the hot water supply apparatus 1. In the present embodiment, a start signal for hot water filling operation will be called a hot water output command. The user can operate the remote controller 130 to input a degree of urgency of the hot water output command. An expected hot water output quantity for hot water filling operation is preliminarily stored in the storage device.

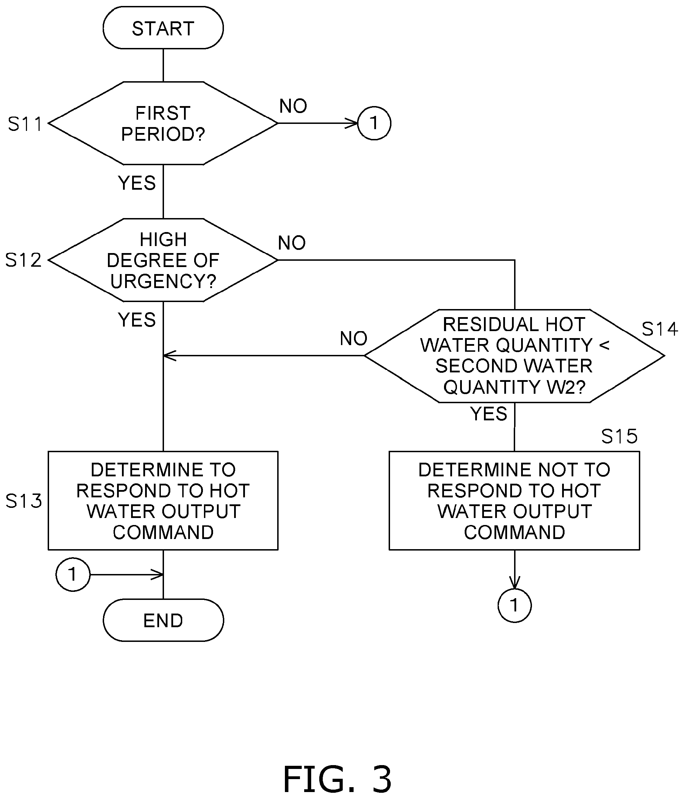

Upon receipt of a hot water output command, the DR control unit 192 determines whether or not to respond to the hot water output command in accordance with the degree of urgency of the hot water output command as depicted in a flowchart in FIG. 3.

Upon receipt of the hot water output command, the DR control unit 192 determines whether or not the first period is ongoing (step S11). If the first period is not ongoing (NO in step S11), the DR control unit 192 does not determine whether or not to respond to the hot water output command.

If the first period is ongoing (YES in step S11), the DR control unit 192 determines whether or not the degree of urgency is high (step S12).

If the degree of urgency is high (yes in step S12), the DR control unit 192 determines to respond to the hot water output command regardless of the residual hot water quantity (step S13). In other words, if the degree of urgency is high, the DR control unit 192 determines to respond to the hot water output command even when the residual hot water quantity is less than a second water quantity W2. The second water quantity W2 is obtained by adding an expected hot water output quantity and a predetermined first water quantity W1.

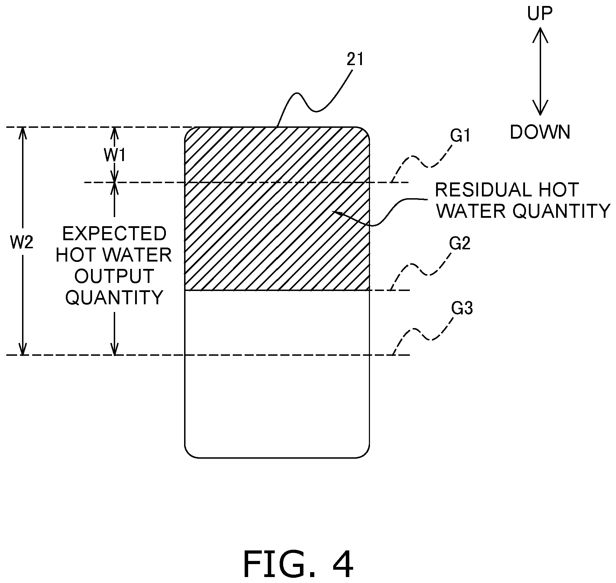

FIG. 4 is an explanatory view of the first water quantity W1 and the second water quantity W2. Hot water in the hot water reservoir tank 21 is boiled from the top of the hot water reservoir tank 21 toward the bottom of the hot water reservoir tank 21. As depicted in FIG. 4, the second water quantity W2 is obtained by adding the first water quantity W1 and the expected hot water output quantity, and corresponds to a quantity of hot water positioned above broken line G3. The residual hot water quantity corresponds to a quantity of hot water positioned above broken line G2.

A single user typically uses 50 liters of hot water via a faucet or a shower for bathing. A residual hot water quantity less than 50 liters will highly possibly cause hot water shortage if the user starts bathing immediately after completion of hot water filling operation. Accordingly, the predetermined first water quantity W1 is exemplarily 50 liters.

As depicted in FIG. 4, even when the residual hot water quantity is less than the second water quantity W2, the DR control unit 192 starts hot water filling operation in response to the hot water output command if the degree of urgency is high. In this case, the DR control unit 192 determines to execute boiling operation such that a residual hot water quantity after the end of hot water filling operation becomes equal to or more than the first water quantity W1 in order to suppress hot water shortage. The first water quantity W1 corresponds to a quantity of hot water positioned above broken line G1. A residual hot water quantity after the end of hot water filling operation may be calculated with reference to a current residual hot water quantity, an expected hot water output quantity, a boiled hot water quantity during boiling operation, a used hot water quantity, and the like.

If the degree of urgency is low (NO in step S12), the DR control unit 192 determines not to respond to the hot water output command when the residual hot water quantity is less than the second water quantity W2 (YES in step S14) (step S15). Alternatively, even when the degree of urgency is low, the DR control unit 192 may determine to respond to the hot water output command if the residual hot water quantity is more than a second water quantity W2 (NO in step S14) (step S13). In this case, the DR control unit 192 may determine not to execute boiling operation during the first period.

### (3) Characteristics

(3-1)
There has been conventionally known the device control apparatus configured to change the setting condition of the air conditioner to the setting condition desired by the user during demand response control in response to the decreasing DR request. The user selects a desired setting condition from one or more setting conditions presented by the device control apparatus.

However, the hot water reserving hot water supply apparatus executes planned boiling operation and preliminarily reserves hot water thus heated in the hot water reservoir tank. Accordingly, the hot water output command is different from a command for boiling operation. The device control apparatus according to Patent Literature 1, which requires selection by the user, may thus lead to deterioration of user convenience.

The hot water supply system 100 according to the present embodiment includes the hot water reservoir tank 21 and the control unit 190. The control unit 190 controls operation of the hot water supply apparatus 1 configured to execute boiling operation of heating hot water in the hot water reservoir tank 21. The control unit 190 receives the demand response request. The control unit 190 determines whether or not to respond to a hot water output command when the hot water output command is issued during the first period set in accordance with the demand response request and provided for suppression of power consumption.

Prohibiting hot water output during the first period leads to deterioration of user convenience. Such a configuration leads to enhancement of user convenience.

(3-2)
In the hot water supply system 100 according to the present embodiment, the control unit 190 determines whether or not to respond to the hot water output command in accordance with the degree of urgency.

Determining whether or not to output hot water in accordance with the degree of urgency leads to enhancement of user convenience.

(3-3)
In the hot water supply system 100 according to the present embodiment, the control unit 190 determines the degree of urgency in accordance with user operation.

Determining whether or not to output hot water in accordance with user operation leads to enhancement of user convenience.

(3-4)
In the hot water supply system 100 according to the present embodiment, the control unit 190 determines whether or not to respond to the hot water output command in accordance with the residual hot water quantity in the hot water reservoir tank 21 and the expected hot water output quantity according to the hot water output command.

A hot water output command with a large expected hot water output quantity typically has high priority. Determining whether or not to output hot water in accordance with the expected hot water output quantity leads to enhancement of user convenience.

(3-5)
In the hot water supply system 100 according to the present embodiment, the control unit 190 outputs hot water in response to the hot water output command if the residual hot water quantity is less than the second water quantity W2 obtained by adding the expected hot water output quantity and the predetermined first water quantity W1.

In such a configuration, hot water is output even when the residual hot water quantity is less than the second water quantity W2, so as to enhance user convenience.

(3-6)
In the hot water supply system 100 according to the present embodiment, the control unit 190 executes boiling operation and outputs hot water.

Such a configuration can suppress hot water shortage. This leads to enhancement of user convenience.

(3-7)
In the hot water supply system 100 according to the present embodiment, the control unit 190 heats hot water such that the residual hot water quantity becomes equal to or more than the first water quantity W1 during boiling operation.

Such a configuration can suppress hot water shortage. This leads to enhancement of user convenience.

### (4) Modification examples

### (4-1) Modification example 1A

According to the present embodiment, if the degree of urgency is high, the DR control unit 192 determines to respond to the hot water output command even when the residual hot water quantity is less than the second water quantity W2. In this case, the DR control unit 192 may determine to output hot water having a quantity equal to or less than the residual hot water quantity.

Such a configuration enables control not to execute boiling operation during the first period. Alternatively, a boiled hot water quantity can be reduced during boiling operation. This achieves suppression of power consumption by boiling operation so as to respond to the decreasing DR request.

### (4-2) Modification example 1B

According to the present embodiment, if the degree of urgency is low, the DR control unit 192 determines not to respond to the hot water output command when the residual hot water quantity is less than the second water quantity W2. Alternatively, the DR control unit 192 may determine to output hot water having a quantity equal to or less than the residual hot water quantity if the degree of urgency is low.

Such a configuration achieves suppression of power consumption by boiling operation so as to respond to the decreasing DR request. Furthermore, hot water output leads to enhancement of user convenience.

### (4-3) Modification example 1C

If the degree of urgency is high, the DR control unit 192 may determine to respond to the hot water output command regardless of the residual hot water quantity. If the degree of urgency is low, the DR control unit 192 may determine not to respond to the hot water output command regardless of the residual hot water quantity.

Such a configuration needs no complicated control and facilitates control by the DR control unit 192.

### (4-4) Modification example 1D

If the residual hot water quantity is less than the second water quantity W2, the DR control unit 192 may determine to respond to the hot water output command regardless of the degree of urgency. If the residual hot water quantity is less than the second water quantity W2, the DR control unit 192 may determine to output hot water having a quantity equal to or less than the residual hot water quantity regardless of the degree of urgency.

Such a configuration needs no complicated control and facilitates control by the DR control unit 192.

### (4-5) Modification example 1E

If the residual hot water quantity is less than the second water quantity W2, the DR control unit 192 may determine not to respond to the hot water output command.

Such a configuration achieves suppression of power consumption by boiling operation so as to respond to the decreasing DR request.

### (4-6) Modification example 1F

According to the present embodiment, the DR control unit 192 compares the residual hot water quantity with the second water quantity W2 and determines whether or not to respond to the hot water output command. The DR control unit 192 may alternatively compare the residual hot water quantity with the expected hot water output quantity and determine whether or not to respond to the hot water output command.

### <Second embodiment>

A hot water supply system 200 according to the second embodiment will be described with reference to the drawings. The hot water supply system 200 is the same as the hot water supply system 100 according to the first embodiment in terms of the basic configuration and operation. Description is made hereinafter to the hot water supply system 200 according to the second embodiment referring mainly to differences from the hot water supply system 100 according to the first embodiment.

A control unit 290 principally executes boiling operation, hot water supply operation, hot water filling operation, and reheating operation. The control unit 290 includes, as a functional block, a receiver 291 and a DR control unit 292. The receiver 291, which is configured identically to the receiver 191, will not be described repeatedly.

### (1) DR control unit

The DR control unit 292 controls not to execute boiling operation during the first period. However, if the DR control unit 292 determines to execute boiling operation as to be described later, boiling operation is executed.

Upon receipt of a hot water output command during the first period, the DR control unit 292 determines whether or not to respond to the hot water output command and controls operation of the hot water supply apparatus 1. In the present embodiment, a start signal for hot water filling operation will be called a hot water output command. The expected hot water output quantity for hot water filling operation is preliminarily stored in the storage device.

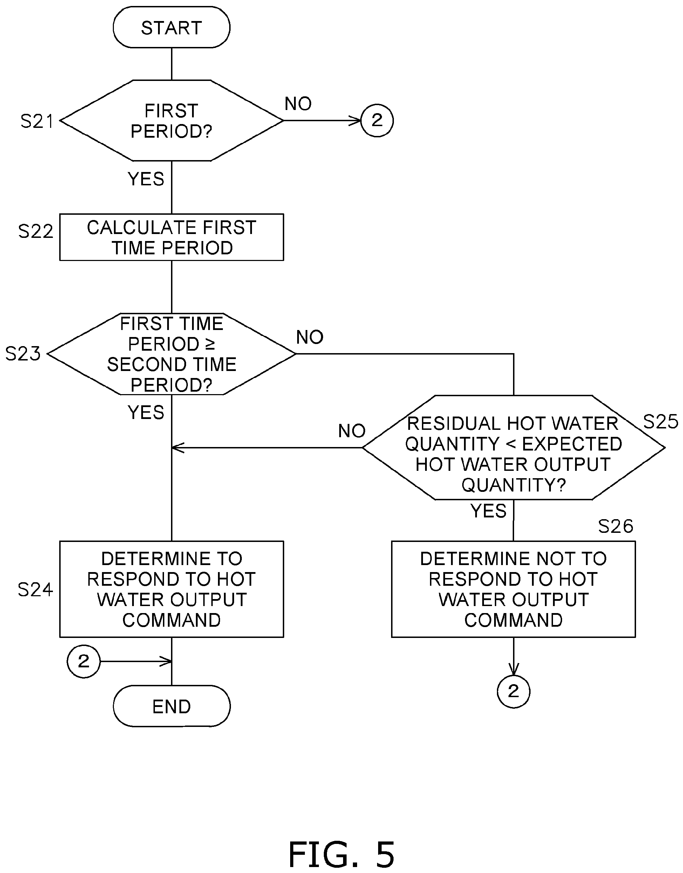

Upon receipt of a hot water output command, the DR control unit 292 determines whether or not to respond to the hot water output command in accordance with a first time period as depicted in a flowchart in FIG. 5.

Upon receipt of the hot water output command, the DR control unit 292 determines whether or not the first period is ongoing (step S21). If the first period is not ongoing (NO in step S21), the DR control unit 292 does not determine whether or not to respond to the hot water output command.

If the first period is ongoing (YES in step S21), the DR control unit 292 calculates the first time period from expected hot water output time according to the hot water output command to end time of the first period (step S22). Examples of the expected hot water output time may include time of receipt of the hot water output command and current time.

If the first time period is shorter than a predetermined second time period and the residual hot water quantity is less than the expected hot water output quantity according to the hot water output command (NO in step S23 and YES in step S25), the DR control unit 292 determines not to respond to the hot water output command (step S26). The second time period is set by the user, and the user can wait for hot water output during the second time period. The user can operate the remote controller 130 to input the second time period. Alternatively, if the residual hot water quantity is equal to or more than the expected hot water output quantity according to the hot water output command (NO in step S25), the DR control unit 292 may determine to respond to the hot water output command (step S24). In this case, the DR control unit 292 may determine not to execute boiling operation during the first period.

If the first time period is equal to or longer than the second time period (YES in step S23), the DR control unit 292 determines to respond to the hot water output command regardless of the residual hot water quantity, and starts hot water filling operation (step S24). In other words, if the first time period is equal to or longer than the second time period, the DR control unit 292 determines to respond to the hot water output command even when the residual hot water quantity is less than the expected hot water output quantity according to the hot water output command. In this case, the DR control unit 292 determines to execute boiling operation in order to suppress hot water shortage.

### (2) Characteristics

(2-1)
In the hot water supply system 200 according to the present embodiment, the control unit 290 determines whether or not to respond to the hot water output command in accordance with the first time period from the expected hot water output time according to the hot water output command to the end time of the first period.

Determining whether or not to output hot water in accordance with a time period until end time of the decreasing DR request leads to enhancement of user convenience.

(2-2)
In the hot water supply system 200 according to the present embodiment, the control unit 290 executes boiling operation and outputs hot water if the residual hot water quantity in the hot water reservoir tank 21 is less than the expected hot water output quantity according to the hot water output command and the first time period is equal to or longer than the predetermined second time period.

Hot water is output if the first time period is equal to or longer than the second time period which is the time that the user can wait for hot water output, even when the residual hot water quantity is small, so as to enhance user convenience.

(2-3)
In the hot water supply system 200 according to the present embodiment, the control unit 290 does not output hot water in accordance with the hot water output command if the residual hot water quantity in the hot water reservoir tank 21 is less than the expected hot water output quantity according to the hot water output command and the first time period is shorter than the predetermined second time period.

Hot water is not output in accordance with the hot water output command if the first time period is shorter than the second time period which is the time that the user can wait for hot water output. Such a configuration achieves suppression of power consumption by boiling operation so as to respond to the decreasing DR request.

(2-4)
In the hot water supply system 200 according to the present embodiment, the second time period is set by the user.

The user can set a desired time period in such a configuration, for enhancement of user convenience.

### <Third embodiment>

A hot water supply system 300 according to the third embodiment will be described with reference to the drawings. The hot water supply system 300 is the same as the hot water supply system 100 according to the first embodiment in terms of the basic configuration and operation. Description is made hereinafter to the hot water supply system 300 according to the third embodiment referring mainly to differences from the hot water supply system 100 according to the first embodiment.

A control unit 390 principally executes boiling operation, hot water supply operation, hot water filling operation, hot water adding operation, and reheating operation. The control unit 390 includes, as a functional block, a receiver 391 and a DR control unit 392. The receiver 391, which is configured identically to the receiver 191, will not be described repeatedly.

Hot water adding operation includes supplying the bathtub 150 with hot water in the hot water reservoir tank 21. Hot water adding operation is the same as hot water filling operation in terms of basic operation. The control unit 390 starts hot water adding operation upon receipt of a start signal for hot water adding operation by user operation of the remote controller 130. During hot water adding operation, the control unit 390 may end hot water adding operation upon receipt of an end signal for hot water filling operation by user operation of the remote controller 130 or when the water level in the bathtub 150 detected by the water level sensor (not depicted) provided at the bathtub 150 reaches a predetermined target value.

### (1) DR control unit

The DR control unit 392 controls not to execute boiling operation during the first period. However, if the DR control unit 392 determines to execute boiling operation as to be described later, boiling operation is executed.

The DR control unit 392 determines whether or not to respond to a hot water output command when the hot water output command is issued during the first period, and controls operation of the hot water supply apparatus 1. In the present embodiment, a start signal for hot water filling operation, a start signal for hot water adding operation, and a start signal for reheating operation will be each called a hot water output command. The expected hot water output quantity for hot water filling operation is preliminarily stored in the storage device. An expected hot water output quantity for hot water adding operation may be calculated in accordance with the water level in the bathtub 150 detected by the water level sensor (not depicted) provided at the bathtub 150, output signals from the mixed water temperature sensor T7 and the second hot water supply temperature sensor T9, and the like. An expected hot water output quantity for reheating operation may be calculated in accordance with output signals from the second hot water supply temperature sensor T9 and the bathtub return temperature sensor T10, and the like.

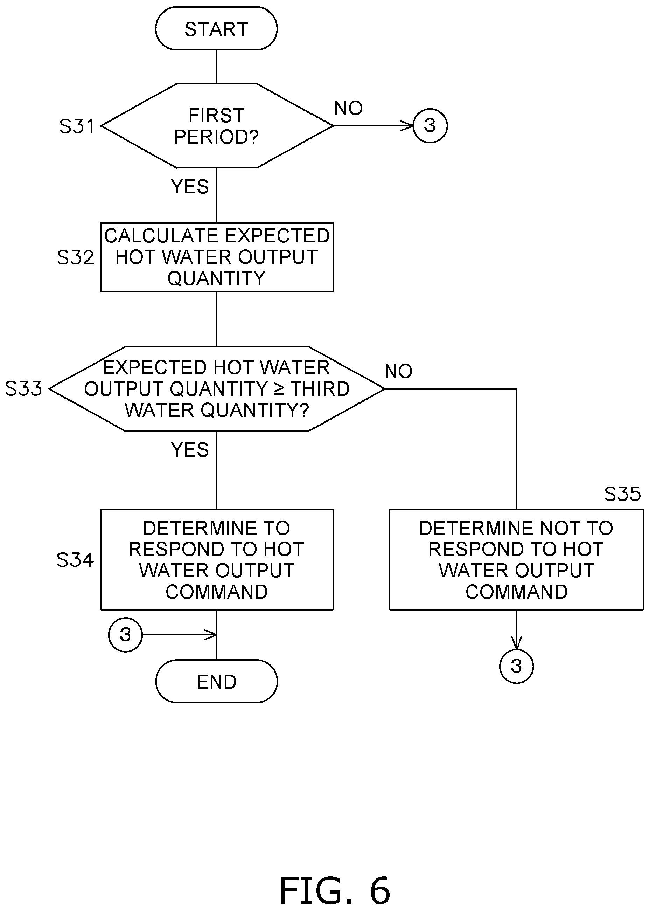

Upon receipt of a hot water output command, the DR control unit 392 determines whether or not to respond to the hot water output command in accordance with the expected hot water output quantity according to the hot water output command as depicted in a flowchart in FIG. 6.

Upon receipt of the hot water output command, the DR control unit 392 determines whether or not the first period is ongoing (step S31). If the first period is not ongoing (NO in step S31), the DR control unit 392 does not determine whether or not to respond to the hot water output command.

If the first period is ongoing (YES in step S31), the DR control unit 392 calculates the expected hot water output quantity according to the hot water output command (step S32).

If the expected hot water output quantity according to the hot water output command is equal to or more than a third water quantity (YES in step S33), the DR control unit 392 determines to respond to the hot water output command (step S34).

If the expected hot water output quantity is less than the third water quantity (NO in step S33), the DR control unit 392 determines not to respond to the hot water output command (step S35).

In an exemplary case where the hot water output command is a start signal for hot water filling operation, the DR control unit 392 determines whether or not the expected hot water output quantity for hot water filling operation is equal to or more than the third water quantity. If the expected hot water output quantity is equal to or more than the third water quantity, the DR control unit 392 determines to respond to the hot water output command and starts hot water filling operation.

In another exemplary case where the hot water output command is a start signal for hot water adding operation, the DR control unit 392 determines whether or not the expected hot water output quantity for hot water adding operation is equal to or more than the third water quantity. If the expected hot water output quantity is equal to or more than the third water quantity, the DR control unit 392 determines to respond to the hot water output command and starts hot water adding operation.

In still another exemplary case where the hot water output command is a start signal for reheating operation, the DR control unit 392 determines whether or not the expected hot water output quantity for reheating operation is equal to or more than the third water quantity. If the expected hot water output quantity is equal to or more than the third water quantity, the DR control unit 392 determines to respond to the hot water output command and starts reheating operation.

### (2) Characteristics

(2-1)
In the hot water supply system 300 according to the present embodiment, the control unit 390 outputs hot water in response to the hot water output command when the expected hot water output quantity according to the hot water output command is equal to or more than the third water quantity.

A hot water output command with a large expected hot water output quantity often has high priority. Such a configuration leads to enhancement of user convenience.

### (3) Modification examples

### (3-1) Modification example 3A

In the present embodiment, the DR control unit 392 determines whether or not to respond to the hot water output command in accordance with the expected hot water output quantity according to the hot water output command. The DR control unit 392 may alternatively determine whether or not to respond to the hot water output command in accordance with operation details of the hot water supply apparatus 1 according to the hot water output command. Information including the operation details of the hot water supply apparatus 1 associated with whether or not hot water can be output during the first period may be preliminarily stored in the storage device as hot water output information. The hot water output information may be set through operation of the remote controller 130 by the user of the hot water supply apparatus 1.

Determining whether or not to output hot water in accordance with the operation details of the hot water supply apparatus 1 leads to enhancement of user convenience.

### <Fourth embodiment>

A hot water supply system 400 according to the fourth embodiment will be described with reference to the drawings.

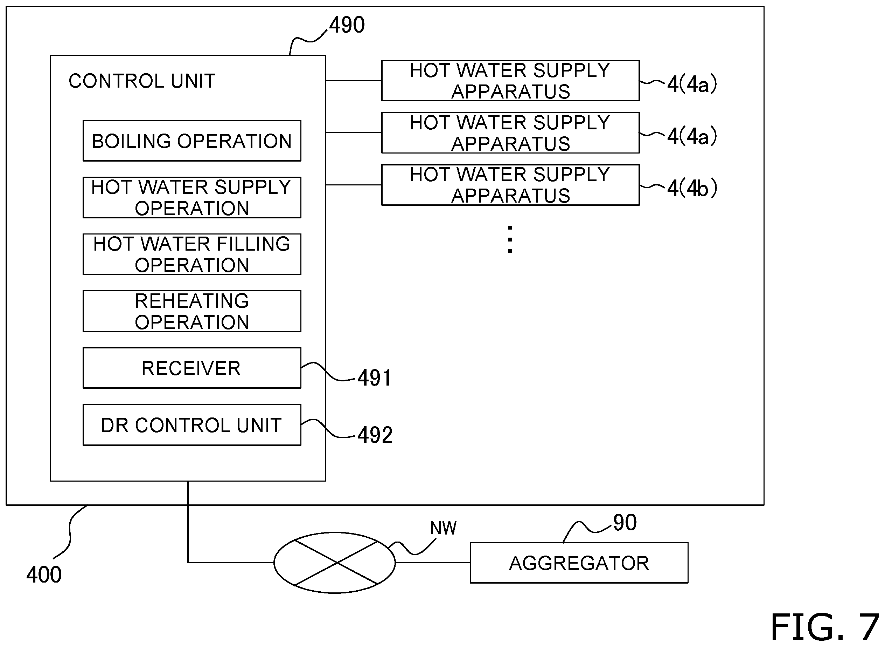

As depicted in FIG. 7, the hot water supply system 400 according to the fourth embodiment includes two or more hot water supply apparatuses 4. Each of the hot water supply apparatuses 4 is the same as the hot water supply apparatus 1 according to the first embodiment in terms of the basic configuration and operation. Description is made hereinafter to the hot water supply system 400 according to the fourth embodiment referring mainly to differences from the hot water supply system 100 according to the first embodiment.

A control unit 490 principally executes boiling operation, hot water supply operation, hot water filling operation, and reheating operation of each of the hot water supply apparatuses 4. The control unit 490 includes, as a functional block, a receiver 491 and a DR control unit 492. The receiver 491, which is configured identically to the receiver 191, will not be described repeatedly.

### (1) DR control unit

When one of the hot water supply apparatuses 4 executes boiling operation during the first period, the DR control unit 492 restricts operation of the remaining hot water supply apparatuses 4.

Specifically, the DR control unit 492 restricts the number of the hot water supply apparatuses 4 executing boiling operation during the first period. The DR control unit 492 sets a power consumption reduction target value to a value equal to or more than a target value on power consumption (reduction average value) included in the decreasing DR request. The DR control unit 492 calculates the number of the hot water supply apparatuses 4 to be restricted in accordance with the reduction target value. Information including the reduction target value associated with the number of apparatuses to be restricted may be preliminarily stored in the storage device as reference information. The DR control unit 492 may alternatively determine the number of apparatuses to be restricted in accordance with the reference information.

The DR control unit 492 stores in the storage device the number of the hot water supply apparatuses 4 having executed boiling operation during the first period. With any additional command for boiling operation of a hot water supply apparatus 4b in a state where boiling operation for hot water supply apparatuses 4a as the number of apparatuses to be restricted has already started, the DR control unit 492 determines not to execute boiling operation of the hot water supply apparatus 4b.

### (2) Characteristics

(2-1)
In the hot water supply system 400 according to the present embodiment, the control unit 490 controls the two or more hot water supply apparatuses 4. When one of hot water supply apparatuses 4 executes boiling operation during the first period, the control unit 490 restricts operation of the remaining hot water supply apparatuses 4.

Such a configuration can restrict entire power consumption of the plurality of hot water supply apparatuses 4. This achieves response to the decreasing DR request.

(2-2)
In the hot water supply system 400 according to the present embodiment, the control unit 490 sets the power consumption reduction target value to the value equal to or more than the power consumption reduction average value set in accordance with the demand response request.

Such a configuration can restrict entire power consumption of the plurality of hot water supply apparatuses 4 even when one or more hot water supply apparatuses 4 execute boiling operation. This achieves response to the decreasing DR request.

(2-3)
In the hot water supply system 400 according to the present embodiment, the control unit 490 restricts the number of the hot water supply apparatuses 4 executing boiling operation during the first period.

Such a configuration can restrict entire power consumption of the plurality of hot water supply apparatuses 4. This achieves response to the decreasing DR request.

### (3) Modification examples

### (3-1) Modification example 4A

According to the present embodiment, the DR control unit 492 restricts the number of the hot water supply apparatuses 4 executing boiling operation during the first period. Alternatively, if one of the hot water supply apparatuses 4 executes boiling operation, the DR control unit 492 may determine to execute boiling operation of the remaining hot water supply apparatuses 4 with a heating capacity less than a standard heating capacity. The standard heating capacity corresponds to a heating capacity for ordinary boiling operation, and indicates a heating capacity with normal rated power utilizing commercial power (the maximum value of electric power usable in a continuously operating state at specified ambient temperature).

Such a configuration can restrict entire power consumption of the plurality of hot water supply apparatuses 4. This achieves response to the decreasing DR request.

The embodiment of the present disclosure has been described above. Various changes to modes and details will be available without departing from the object and the scope of the present invention as defined in the claims,

### REFERENCE SIGNS LIST

- 1: hot water supply apparatus
- 4: hot water supply apparatus
- 21: hot water reservoir tank, tank
- 100: hot water supply system
- 190: control unit
- 200: hot water supply system
- 290: control unit
- 300: hot water supply system
- 390: control unit
- 400: hot water supply system
- 490: control unit

### CITATION LIST

### PATENT LITERATURE

Patent Literature 1: JP 2019-105984 A

## Claims

1. A hot water supply system (100, 200, 300, 400) comprising:
a tank (21); and
a control unit (190, 290, 390, 490) configured to control operation of a hot water supply apparatus (1, 4) configured to execute boiling operation of heating hot water in the tank,
wherein the control unit
receives a demand response request, wherein the demand response request refers to a request from an aggregator to suppress or increase power consumption in a defined time period; and
determines whether or not to respond to a hot water output command when the hot water output command is issued during a first period set in accordance with the demand response request and provided for suppression of power consumption, **characterized in that** the control unit determines whether or not to respond to the hot water output command in accordance with a residual hot water quantity in the tank and an expected hot water output quantity according to the hot water output command.

2. The hot water supply system according to claim 1, wherein the control unit determines whether or not to respond to the hot water output command in accordance with a degree of urgency, wherein the degree of urgency is a priority level concerning the hot water output command.

3. The hot water supply system according to claim 2, wherein the control unit determines the degree of urgency in accordance with user operation.

4. The hot water supply system according to any of the previous claims, wherein the control unit outputs hot water in response to the hot water output command when the residual hot water quantity is less than a second water quantity obtained by adding the expected hot water output quantity and a predetermined first water quantity, wherein the first water quantity is a general quantity of hot water used by a user via a faucet or a shower for bathing, and wherein the second water quantity is a quantity obtained by adding the first water quantity and the expected hot water output quantity.

5. The hot water supply system according to claim 4, wherein the control unit executes the boiling operation and outputs hot water.

6. The hot water supply system according to claim 5, wherein the control unit heats hot water such that the residual hot water quantity becomes equal to or more than the first water quantity during the boiling operation.

7. The hot water supply system according to any one of claims 4 to 6, wherein the control unit outputs hot water having a quantity equal to or less than the residual hot water quantity.

8. The hot water supply system according to any of claims 1 to 3, wherein the control unit does not output hot water in accordance with the hot water output command when the residual hot water quantity is less than a second water quantity obtained by adding the expected hot water output quantity and a predetermined first water quantity, wherein the first water quantity is a general quantity of hot water used by a user via a faucet or a shower for bathing and wherein the second water quantity is a quantity obtained by adding the first water quantity and the expected hot water output quantity.

9. The hot water supply system according to claim 1, wherein the control unit executes the boiling operation and outputs hot water when a residual hot water quantity in the tank is less than an expected hot water output quantity according to the hot water output command and a first time period is equal to or longer than a predetermined second time period, the first time period being defined as a length of time from an expected hot water output time according to the hot water output command to an end time of the first period,

10. The hot water supply system according to claim 1, wherein the control unit does not output hot water in accordance with the hot water output command when a residual hot water quantity in the tank is less than an expected hot water output quantity according to the hot water output command and a first time period is shorter than a predetermined second time period, the first time period being defined as a length of time from an expected hot water output time according to the hot water output command to an end time of the first period.

11. The hot water supply system according to any one of claims 1 to 10, wherein
the control unit
controls operation of two or more of the hot water supply apparatuses, and
restricts operation of remaining hot water supply apparatuses when one of the hot water supply apparatuses executes the boiling operation during the first period.

12. The hot water supply system according to any one of claims 1 to 11, wherein the control unit sets a power consumption reduction target value to a value equal to or more than a power consumption reduction average value set in accordance with the demand response request.

13. The hot water supply system according to any one of claims 1 to 12, wherein the control unit restricts a number of the hot water supply apparatuses executing the boiling operation during the first period.

## Patentansprüche

1. Warmwasserversorgungssystem (100, 200, 300, 400) umfassend:
einen Behälter (21); und
eine Steuereinheit (190, 290, 390, 490), die ausgelegt ist, um den Betrieb einer Warmwasserversorgungsvorrichtung (1, 4) zu steuern, die ausgelegt ist, um einen Siedebetrieb zur Warmwassererhitzung in dem Behälter durchzuführen,
wobei die Steuereinheit
eine Laststeuerungsanforderung empfängt, wobei sich die Laststeuerungsanforderung auf eine Anforderung von einem Aggregator zum Drosseln oder Erhöhen des Stromverbrauchs in einem definierten Zeitraum bezieht; und
bestimmt, ob auf einen Warmwasserausgabebefehl reagiert wird oder nicht, wenn der Warmwasserausgabebefehl während eines im Einklang mit der Laststeuerungsanforderung festgelegten ersten Zeitraums erteilt und zum Drosseln des Stromverbrauchs bereitgestellt wird, **dadurch gekennzeichnet, dass** die Steuereinheit im Einklang mit einer Restwarmwassermenge in dem Behälter und einer gemäß dem Warmwasserausgabebefehl erwarteten Warmwasserausgabemenge bestimmt, ob auf den Warmwasserausgabebefehl reagiert wird oder nicht.

2. Warmwasserversorgungssystem nach Anspruch 1, wobei die Steuereinheit im Einklang mit einem Dringlichkeitsgrad bestimmt, ob auf den Warmwasserausgabebefehl reagiert wird oder nicht, wobei der Dringlichkeitsgrad eine Prioritätsstufe betreffend den Warmwasserausgabebefehl ist.

3. Warmwasserversorgungssystem nach Anspruch 2, wobei die Steuereinheit den Dringlichkeitsgrad im Einklang mit dem Nutzerbetrieb bestimmt.

4. Warmwasserversorgungssystem nach einem der vorhergehenden Ansprüche, wobei die Steuereinheit Warmwasser als Reaktion auf den Warmwasserausgabebefehl ausgibt, wenn die Restwarmwassermenge geringer als eine zweite Wassermenge ist, die durch Addieren der erwarteten Warmwasserausgabemenge und einer vorbestimmten ersten Wassermenge erhalten wird, wobei die erste Wassermenge eine allgemeine Menge von Warmwasser ist, die von einem Nutzer über einen Wasserhahn oder eine Dusche zur Körperpflege verwendet wird, und wobei die zweite Wassermenge eine Menge ist, die durch Addieren der ersten Wassermenge und der erwarteten Warmwasserausgabemenge erhalten wird.

5. Warmwasserversorgungssystem nach Anspruch 4, wobei die Steuereinheit den Siedebetrieb durchführt und Warmwasser ausgibt.

6. Warmwasserversorgungssystem nach Anspruch 5, wobei die Steuereinheit Warmwasser derart erhitzt, dass die Restwarmwassermenge während des Siedebetriebs gleich der ersten Wassermenge oder größer als diese wird.

7. Warmwasserversorgungssystem nach einem der Ansprüche 4 bis 6, wobei die Steuereinheit Warmwasser ausgibt, das eine Menge gleich oder kleiner als die Restwarmwassermenge aufweist.

8. Warmwasserversorgungssystem nach einem der Ansprüche 1 bis 3, wobei die Steuereinheit kein Warmwasser im Einklang mit dem Warmwasserausgabebefehl ausgibt, wenn die Restwarmwassermenge geringer als eine zweite Wassermenge ist, die durch Addieren der erwarteten Warmwasserausgabemenge und einer vorbestimmten ersten Wassermenge erhalten wird, wobei die erste Wassermenge eine allgemeine Menge von Warmwasser ist, die von einem Nutzer über einen Wasserhahn oder eine Dusche zur Körperpflege verwendet wird, und wobei die zweite Wassermenge eine Menge ist, die durch Addieren der ersten Wassermenge und der erwarteten Warmwasserausgabemenge erhalten wird.

9. Warmwasserversorgungssystem nach Anspruch 1, wobei die Steuereinheit den Siedebetrieb durchführt und Warmwasser ausgibt, wenn eine Restwarmwassermenge in dem Behälter geringer als eine erwartete Warmwasserausgabemenge gemäß dem Warmwasserausgabebefehl ist und ein erster Zeitraum gleich einem vorbestimmten zweiten Zeitraum oder länger als dieser ist, wobei der erste Zeitraum als Zeitdauer von einem erwarteten Warmwasserausgabezeitpunkt gemäß dem Warmwasserausgabebefehl bis zu einem Endzeitpunkt des ersten Zeitraums definiert ist.

10. Warmwasserversorgungssystem nach Anspruch 1, wobei die Steuereinheit kein Warmwasser im Einklang mit dem Warmwasserausgabebefehl ausgibt, wenn eine Restwarmwassermenge in dem Behälter geringer als eine erwartete Warmwasserausgabemenge gemäß dem Warmwasserausgabebefehl ist und ein erster Zeitraum kürzer als ein vorbestimmter zweiter Zeitraum ist, wobei der erste Zeitraum als Zeitdauer von einem erwarteten Warmwasserausgabezeitpunkt gemäß dem Warmwasserausgabebefehl bis zu einem Endzeitpunkt des ersten Zeitraums definiert ist.

11. Warmwasserversorgungssystem nach einem der Ansprüche 1 bis 10, wobei
die Steuereinheit
den Betrieb von zwei oder mehreren der Warmwasserversorgungsvorrichtungen steuert und
den Betrieb restlicher Warmwasserversorgungsvorrichtungen begrenzt, wenn eine der Warmwasserversorgungsvorrichtungen den Siedebetrieb während des ersten Zeitraums durchführt.

12. Warmwasserversorgungssystem nach einem der Ansprüche 1 bis 11, wobei die Steuereinheit einen Stromverbrauchsreduktionszielwert auf einen Wert festlegt, der gleich einem im Einklang mit der Laststeuerungsanforderung festgelegten Stromverbrauchsreduktionsdurchschnittswert oder größer als dieser ist.

13. Warmwasserversorgungssystem nach einem der Ansprüche 1 bis 12, wobei die Steuereinheit eine Anzahl der Warmwasserversorgungsvorrichtungen begrenzt, die den Siedebetrieb während des ersten Zeitraums durchführen.

## Revendications

1. Système d'alimentation en eau chaude (100, 200, 300, 400), comprenant :
un réservoir (21) ; et
une unité de commande (190, 290, 390, 490) configurée pour commander le fonctionnement d'un appareil d'alimentation en eau chaude (1, 4) configuré pour exécuter une opération d'ébullition d'eau chaude chauffée dans le réservoir,
dans lequel l'unité de commande
reçoit une invitation de réponse à la demande, dans lequel l'invitation de réponse à la demande se réfère à une invitation provenant d'un agrégateur pour supprimer ou augmenter la consommation d'énergie dans une période de temps définie ; et
détermine s'il faut ou non répondre à une commande de délivrance d'eau chaude lorsque la commande de délivrance d'eau chaude est émise pendant une première période définie conformément à l'invitation de réponse à la demande et prévue pour la suppression de la consommation d'énergie, **caractérisé en ce que** l'unité de commande détermine s'il faut ou non répondre à la commande de délivrance d'eau chaude conformément à une quantité d'eau chaude résiduelle dans le réservoir et d'une quantité de délivrance d'eau chaude attendue selon la commande de délivrance d'eau chaude.

2. Système d'alimentation en eau chaude selon la revendication 1, dans lequel l'unité de commande détermine s'il faut ou non répondre à la commande de délivrance d'eau chaude conformément à un degré d'urgence, dans lequel le degré d'urgence est un niveau de priorité concernant la commande de délivrance d'eau chaude.

3. Système d'alimentation en eau chaude selon la revendication 2, dans lequel l'unité de commande détermine le degré d'urgence conformément à l'exploitation par un utilisateur.

4. Système d'alimentation en eau chaude selon l'une quelconque des revendications précédentes, dans lequel l'unité de commande délivre de l'eau chaude en réponse à la commande de délivrance d'eau chaude lorsque la quantité d'eau chaude résiduelle est inférieure à une seconde quantité d'eau obtenue en ajoutant la quantité de délivrance d'eau chaude attendue et une première quantité d'eau prédéterminée, dans lequel la première quantité d'eau est une quantité générale d'eau chaude utilisée par un utilisateur par l'intermédiaire d'un robinet ou d'une douche pour le bain, et dans lequel la seconde quantité d'eau est une quantité obtenue en ajoutant la première quantité d'eau et la quantité de délivrance d'eau chaude attendue.

5. Système d'alimentation en eau chaude selon la revendication 4, dans lequel l'unité de commande exécute l'opération d'ébullition et délivre de l'eau chaude.

6. Système d'alimentation en eau chaude selon la revendication 5, dans lequel l'unité de commande chauffe l'eau chaude de telle sorte que la quantité d'eau chaude résiduelle devienne égale ou supérieure à la première quantité d'eau pendant l'opération d'ébullition.

7. Système d'alimentation en eau chaude selon l'une quelconque des revendications 4 à 6, dans lequel l'unité de commande délivre de l'eau chaude ayant une quantité égale ou inférieure à la quantité d'eau chaude résiduelle.

8. Système d'alimentation en eau chaude selon l'une quelconque des revendications 1 à 3, dans lequel l'unité de commande ne délivre pas d'eau chaude conformément à la commande de délivrance d'eau chaude lorsque la quantité d'eau chaude résiduelle est inférieure à une seconde quantité d'eau obtenue en ajoutant la quantité de délivrance d'eau chaude attendue et une première quantité d'eau prédéterminée, dans lequel la première quantité d'eau est une quantité générale d'eau chaude utilisée par un utilisateur par l'intermédiaire d'un robinet ou d'une douche pour le bain et dans lequel la seconde quantité d'eau est une quantité obtenue en ajoutant la première quantité d'eau et la quantité de délivrance d'eau chaude attendue.

9. Système d'alimentation en eau chaude selon la revendication 1, dans lequel l'unité de commande exécute l'opération d'ébullition et délivre de l'eau chaude lorsqu'une quantité d'eau chaude résiduelle dans le réservoir est inférieure à une quantité de délivrance d'eau chaude attendue selon la commande de délivrance d'eau chaude et qu'une première période de temps est égale ou supérieure à une seconde période de temps prédéterminée, la première période de temps étant définie comme une durée allant d'un temps de délivrance d'eau chaude attendu selon la commande de délivrance d'eau chaude à un temps de fin de la première période.

10. Système d'alimentation en eau chaude selon la revendication 1, dans lequel l'unité de commande ne délivre pas d'eau chaude conformément à la commande de délivrance d'eau chaude lorsqu'une quantité d'eau chaude résiduelle dans le réservoir est inférieure à une quantité de délivrance d'eau chaude attendue selon la commande de délivrance d'eau chaude et qu'une première période de temps est plus courte qu'une seconde période de temps prédéterminée, la première période de temps étant définie comme une durée allant d'un temps de délivrance d'eau chaude attendu selon la commande de délivrance d'eau chaude à un temps de fin de la première période.

11. Système d'alimentation en eau chaude selon l'une quelconque des revendications 1 à 10, dans lequel
l'unité de commande
commande le fonctionnement de deux ou plusieurs des appareils d'alimentation en eau chaude, et
restreint le fonctionnement des appareils d'alimentation en eau chaude restants lorsque l'un des appareils d'alimentation en eau chaude exécute l'opération d'ébullition pendant la première période.

12. Système d'alimentation en eau chaude selon l'une quelconque des revendications 1 à 11, dans lequel l'unité de commande définit une valeur cible de réduction de la consommation d'énergie à une valeur égale ou supérieure à une valeur moyenne de réduction de la consommation d'énergie définie conformément à l'invitation de réponse à la demande.

13. Système d'alimentation en eau chaude selon l'une quelconque des revendications 1 à 12, dans lequel l'unité de commande restreint un certain nombre d'appareils d'alimentation en eau chaude exécutant l'opération d'ébullition pendant la première période.
